**Europäisches Patentamt**

**European Patent Office**

**Office européen des brevets**

(19)

(11) Numéro de publication : **0 466 575 A1**

# (12) DEMANDE DE BREVET EUROPEEN

(21) Numéro de dépôt : **91401902.1**

(22) Date de dépôt : **09.07.91**

(51) Int. Cl.$^5$ : **B62D 55/065,** B62D 55/075, B60K 7/00, B62D 55/116

(30) Priorité : **09.07.90 FR 9008692**

(43) Date de publication de la demande :
**15.01.92 Bulletin 92/03**

(84) Etats contractants désignés :
**BE DE ES GB IT NL**

(71) Demandeur : **FRAMATOME**
**Tour Fiat 1, Place de la Coupole**
**F-92400 Courbevoie (FR)**

(72) Inventeur : **Clar, Georges**
**4, avenue Verguin**
**F-69006 Lyon (FR)**
Inventeur : **Carra, Olivier**
**Le Devey**
**F-26380 Peyrins (FR)**
Inventeur : **Feuillet, Patrice**
**121, rue du Berger**
**F-69230 Marcy L'Etoile (FR)**

(74) Mandataire : **Bourely, Paul et al**
**SOSPI 14-16, rue de la Baume**
**F-75008 Paris (FR)**

(54) **Véhicule à propulseurs motorisés.**

(57) Un moyeu tubulaire à axe transversal (24) lie chaque propulseur allongé (4) au corps du véhicule (2). Il fournit des signaux représentatifs des efforts qu'il transmet. Un moteur d'inclinaison (22) de ce propulseur prend appui sur ce moyeu pour incliner ce propulseur autour de cet axe transversal. Conformément à l'invention, un moteur d'avance est disposé selon cet axe.

L'invention s'applique notamment à des interventions dans des milieux nocifs pour l'homme.

EP 0 466 575 A1

FIG.3

La présente invention concerne un véhicule destiné à des interventions, notamment dans des bâtiments, en l'absence d'un opérateur humain.

Elle trouve notamment application dans des installations industrielles lorsqu'une intervention est nécessaire mais serait dangereuse ou impossible pour un tel opérateur. Un véhicule selon la présente invention peut alors être utilisé. Pour cela il peut être muni d'instruments adéquats tels que des caméras vidéo, des appareils de mesure, et des outils, avec l'aide desquels on constitue un robot.

Un robot selon la présente invention peut être notamment utile dans une centrale nucléaire ou dans une usine de retraitement de combustibles nucléaires lorsque des réparations ou des inspections doivent être faites dans des zones qui sont soumises à de fortes intensités de radiations ionisantes après certains incidents de fonctionnement. De tels robots peuvent cependant être également utiles dans d'autres industries, par exemple dans l'industrie chimique en présence de risques d'explosion, ou pour des missions de sécurité civile ou de surveillance de sites, ou dans le cadre de la robotique de service, par exemple pour des opérations de nettoyage, dans l'agriculture ou dans les activités militaires.

Une qualité importante d'un véhicule de ce genre est son aptitude à se déplacer sur un sol accidenté, c'est-à-dire présentant des obstacles à franchir. Ces derniers peuvent présenter des formes très diverses, par exemple un escalier qui a été prévu pour l'homme et qui doit être monté ou descendu, ou un tuyau tombé sur un plancher. La sûreté de tels véhicules lors du franchissement de tels obstacles présente deux aspects principaux. L'un est la stabilité, c'est-à-dire l'aptitude du véhicule à ne pas basculer sous son propre poids et celui de sa charge. L'autre est l'adhérence et concerne chacun des propulseurs de ce véhicule, c'est-à-dire des organes qui prennent appui sur le sol pour soutenir et faire progresser ou immobiliser le véhicule. L'adhérence d'un tel propulseur est son aptitude à ne pas glisser excessivement au contact du sol, même si ce dernier présente localement un état de surface défavorable.

Une autre qualité importante pour un tel véhicule est sa compacité:

Son encombrement, notamment transversal et longitudinal, doit être de préférence suffisamment petit pour que le véhicule puisse emprunter, à l'intérieur d'un bâtiment, divers couloirs ou passages plus ou moins étroits qui ont été seulement prévus pour un opérateur humain.

Une autre qualité importante est que le véhicule soit aussi léger que possible.

Divers véhicules ont été conçus pour présenter une bonne aptitude à franchir des obstacles avec sûreté.

Un véhicule connu comporte quatre propulseurs chenillés allongés qui sont inclinables par rapport au corps de ce véhicule. La chenille de chacun de ces propulseurs est guidée par un certain nombre d'organes de guidage, notamment par deux roues dont l'une est une roue d'avance pour entraîner le mouvement d'avance de cette chenille. Ces organes sont portés par une carcasse qui constitue la structure de ce propulseur et qui est assemblée au corps du véhicule de manière à permettre d'incliner le propulseur autour d'un axe transversal. Le corps de ce véhicule porte des moteurs d'avance et d'inclinaison pour imposer les uns les rotations des pignons moteur par l'intermédiaire de systèmes de transmission mécaniques et les autres les mouvements d'inclinaison des propulseurs, respectivement. Ces moteurs sont munis de freins pour contrôler ces mouvements. Le corps du véhicule porte en outre des batteries d'alimentation en énergie électrique et des moyens de commande pour les moteurs.

Ce véhicule connu a été proposé par la firme japonaise Mitsubishi sous le nom de MRV (Multifunctional Robot Vehicle) et a été décrit pages 425 et 426 du compte rendu de conférence "85 ICAR International Conference on Advanced Robotics, September 9-10, 1985, Tokyo, Japan organized by : Robotics Society of Japan, The Society of Biomechanisms, Japan Industrial Robot Association".

Il semble permettre de franchir des obstacles de formes connues. Mais il doit pour cela être piloté à vue, quoiqu'à distance, par un opérateur humain. De plus il semble ne présenter les qualités importantes précédemment mentionnées qu'à un degré insuffisant.

La présente invention a notamment pour but de réaliser de manière simple un véhicule d'intervention apte à franchir avec sécurité des obstacles variés tout en conservant un encombrement, notamment transversal, limité lui permettant, de préférence, d'emprunter des passages prévus pour l'homme. Elle vise aussi à permettre, par montage d'outils sur un tel véhicule, de réaliser un robot apte à effectuer des interventions dans des bâtiments divers, notamment lorsqu'un accident a rendu ces locaux inaccessibles à un opérateur humain.

Dans ces buts, elle a pour objet un véhicule à propulseurs motorisés caractérisé par le fait qu'un moteur d'avance d'un propulseur est logé dans un moyeu tubulaire transversal autour duquel ce propulseur peut être incliné par rapport au corps du véhicule grâce à des moyens d'inclinaison motorisés intérieurs à ce propulseur et extérieurs à ce moyeu sur lequel ils prennent appui.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue de côté d'un véhicule selon la présente invention.

La figure 2 représente une vue en perspective du même véhicule.

La figure 3 représente une vue de côté d'un propulseur du même véhicule, dont des parois extérieures ont été enlevées pour montrer les organes internes de ce propulseur.

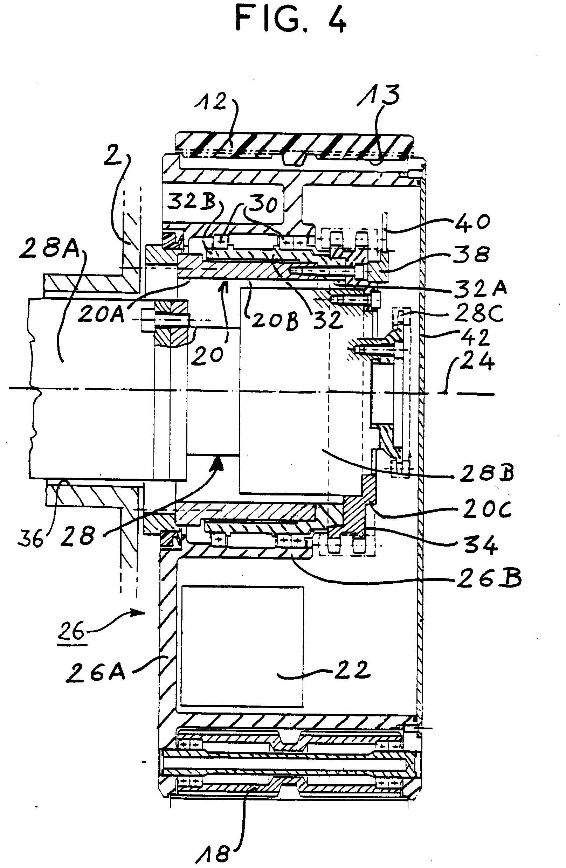

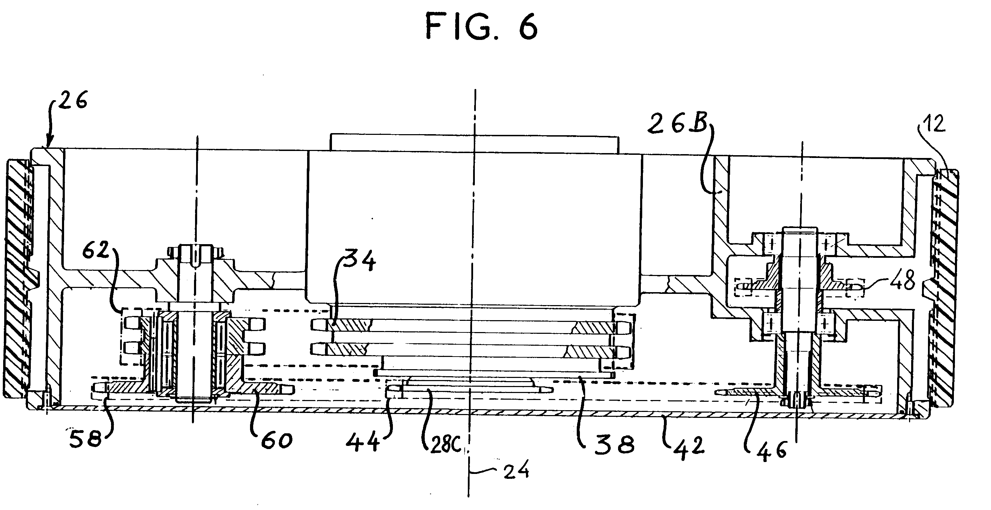

Les figures 4, 5 et 6 représentent des vues de ce propulseur en coupe selon les lignes IV-IV, V-V et VI-VI de la figure 3.

Les figures 7 et 8 représentent des vues en perspective de ce propulseur après enlèvement de parois extérieures.

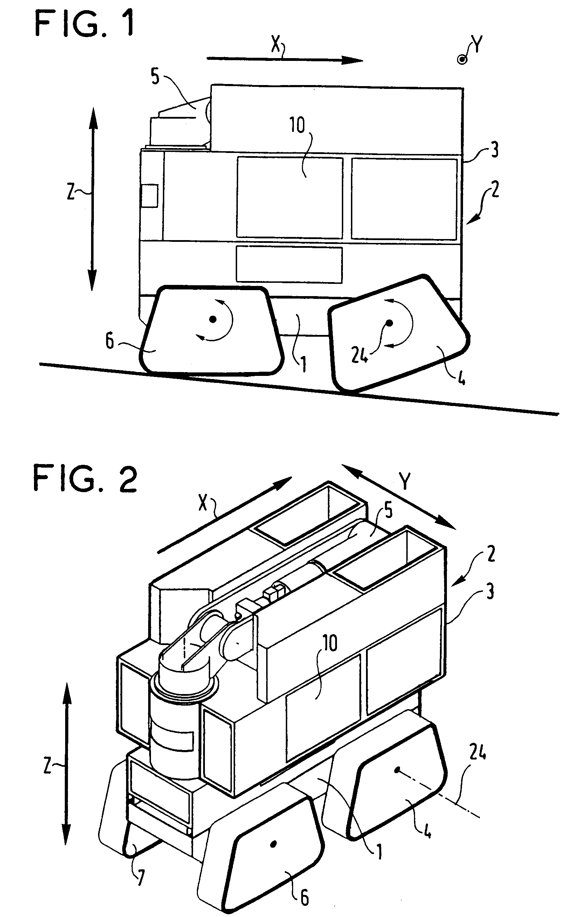

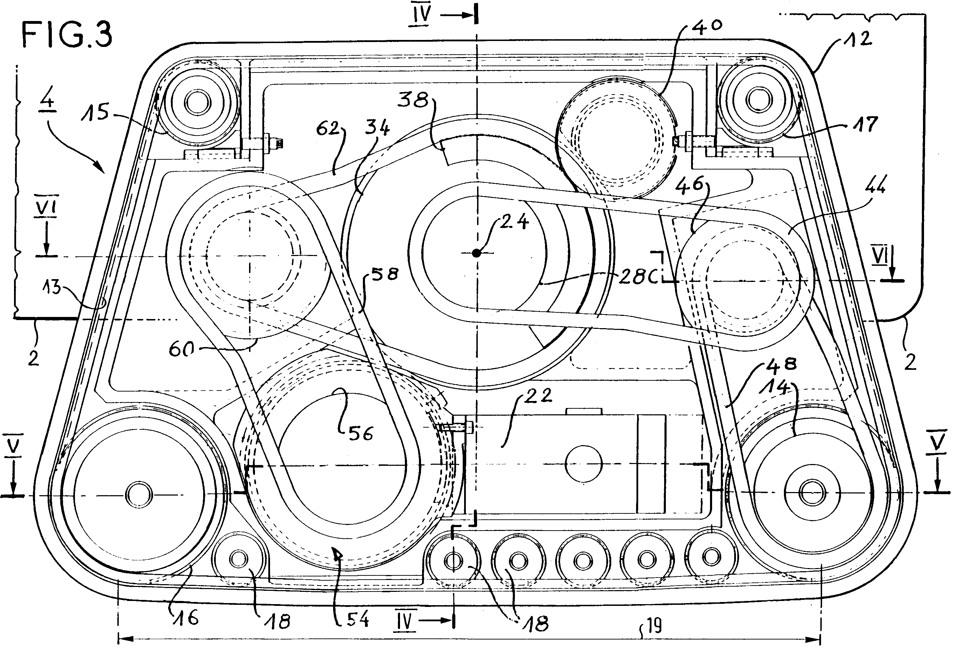

Conformément aux figures 1 et 2, un véhicule autonome selon la présente invention comporte un corps de véhicule 2 dont la partie inférieure 1 est montée sur quatre propulseurs inclinables et amovibles tels que 4, 6 et 7 grâce auxquels le véhicule se déplace selon une direction longitudinale X. Sur la figure 3 il apparaît que chacun de ces propulseurs est muni pour cela d'une chenille 12 à guidage central qui est entraînée par une roue d'avance 14 et supportée par une roue de reprise 16 qui est montée folle, ainsi que par des galets tels que 18. Deux roues folles 15 et 17 de diamètre intermédiaire assurent les renvois de la chenille aux coins supérieurs de la boucle formée par cette dernière. Le corps 2 porte dans sa partie inférieure des batteries d'alimentation électrique dont le grand poids et la position basse contribuent à sa stabilité.

La partie supérieure 3 du corps 2 est plus large que sa partie inférieure selon une direction transversale Y. Elle comporte divers organes dont certains sont relativement légers tels que des moyens de traitement de signaux 10, des moyens de communication, des organes électroniques de puissance ainsi que des capteurs exteroceptifs et un système inertiel non représentés. Cette partie supérieure porte également un bras télémanipulateur 5. Une direction verticale relative du véhicule est représentée par une flèche Z.

L'encombrement transversal de ce corps supérieur est égal à celui du corps inférieur muni des propulseurs, de manière à disposer d'un volume suffisant sans augmenter l'encombrement transversal du véhicule.

On va maintenant indiquer de manière générale diverses dispositions avantageuses qui sont adoptées dans ce véhicule.

– Chacun de ces propulseurs tels que 4 comporte, comme connu, les éléments suivants :

– une carcasse de propulseur 26 pour maintenir mutuellement les éléments de ce propulseur,

– un ensemble d'appui au sol 12, 14, 16 supportant cette carcasse et présentant une plage d'appui au sol 19 qui s'étend selon la direction longitudinale X et jusqu'à deux extrémités de laquelle un point d'appui de cet ensemble sur le sol peut se déplacer, (Cet ensemble est constitué par la chenille 12, les roues 14 et 16 et les galets tels que 18. Sa plage d'appui s'étend de la roue 14 à la roue 16),

– un moteur d'avance 28 entraînant cet ensemble d'appui au sol dans un mouvement d'avance pour propulser la carcasse 26,

– une structure de liaison de propulseur 20 liant la carcasse 26 au corps de véhicule 2 pour supporter ce dernier tout en permettant à cette carcasse d'effectuer, par rapport à ce corps, des mouvements d'inclinaison qui sont des rotations autour d'un axe d'inclinaison 24 parallèle à la direction transversale Y et qui déplacent ledit point d'appui au sol,

– un moteur d'inclinaison 22 permettant, grâce à un appui sur la structure de liaison 20, d'entraîner lesdits mouvements d'inclinaison de la carcasse 26,

– et des capteurs d'efforts 20B pour fournir des signaux représentatifs d'efforts appliqués à ce propulseur 4 par le sol. Les signaux d'efforts ainsi formés sont transmis aux moyens de traitement de signaux 10 par des moyens connus non représentés.

Conformément à une disposition nouvelle, la structure de liaison 20 de chacun des propulseurs tels que 4 comporte

– une partie d'accrochage 20A accrochée au corps de véhicule 2 par l'intermédiaire éventuel d'un système de suspension non représenté, une partie de support 20C portant la carcasse 26 par l'intermédiaire de paliers à roulements à billes 30 pour permettre lesdits mouvements d'inclinaison, cette partie de support servant d'appui pour permettre au moteur d'inclinaison 22 d'entraîner ces mouvements,

– et une partie de mesure 20B reliant mutuellement ces parties d'accrochage et de support et comportant plusieurs dits capteurs d'efforts.

– Cette structure de liaison est constituée par un moyeu de propulseur 20 de forme générale tubulaire. Ce moyeu a un axe selon l'axe d'inclinaison 20 et s'étend transversalement à partir du corps de véhicule 2 vers l'extérieur du véhicule. Il pénètre dans le volume du propulseur où il se termine par sa partie de support 20C.

– Cette partie de support 20C porte une extrémité transversalement externe 32A d'un moyeu externe rigide 32 qui s'étend, à partir de cette extrémité, jusqu'à une extrémité transversalement interne 32B en entourant coaxialement ce moyeu de mesure 20. Ce moyeu externe porte, sur sa surface extérieure, des paliers 30 qui supportent la carcasse 26.

– Le moteur d'avance 28 est situé au moins partiellement dans l'espace intérieur au moyeu de propulseur 20 et est fixé à la partie de support 20C de ce moyeu. Ce moteur entraîne un pignon de moteur d'avance 28C qui tourne autour de l'axe d'inclinaison 24 et qui est situé, selon ladite direction transversale Y, au delà d'une extrémité transversalement externe 20C de ce moyeu.

– Le moteur d'avance 28 comporte une partie mécanique constituée par un réducteur de vitesse 28B porté par la partie de support 20C du moyeu 20 du propulseur 4, et une partie électromécanique. Celle-ci est constituée par un moteur électrique 28A porté par le réducteur de vitesse 28B et situé dans un logement 36 formé dans le corps de véhicule 2 dans le prolongement du moyeu de propulseur 20.

– La partie de support 20C du moyeu de propulseur 20 porte au moins un secteur d'un anneau de repérage d'inclinaison 38, ladite carcasse 26 portant un capteur d'inclinaison 40 qui coopère avec cet anneau de repérage d'inclinaison pour fournir aux moyens de traitement de signaux 10 un signal d'inclinaison représentatif de l'inclinaison du propulseur 4.

– La partie de mesure 20B de la structure de liaison 20 comporte au moins un capteur de force verticale FZ mesurant la force appliquée à cette structure selon une direction verticale Z du corps de véhicule, un capteur de force longitudinale FX mesurant la force appliquée à cette structure selon la direction longitudinale X et un capteur de couple transversal MY mesurant le moment d'un couple de forces appliqué à cette structure autour de l'axe d'inclinaison Y. Plus particulièrement cette partie de mesure est constituée par un capteur de type connu dit "à six composantes" qui mesure en outre la force transversale FY et des moments MX et MZ des couples appliqués autour d'axes longitudinal et vertical, de sorte que l'on mesure les trois composantes de la force résultante générale et les trois composantes du moment résultant de l'ensemble des forces qui sont appliquées au propulseur par le corps 2 du véhicule.

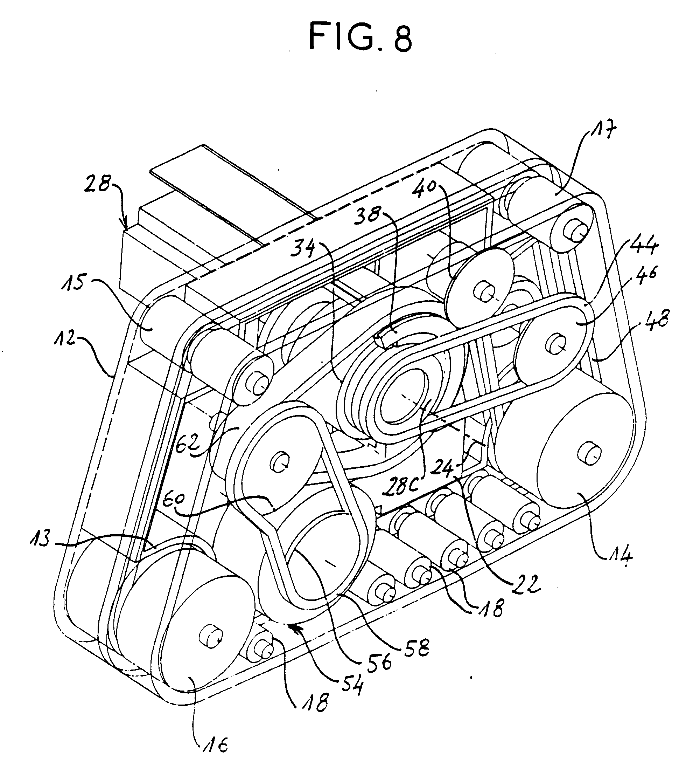

Le pignon de moteur d'avance 28C entraîne à l'aide d'une chaîne 44 un groupe de pignons intermédiaire d'avance 46 qui entraîne lui-même, à l'aide d'une chaîne 48, la roue d'avance 14. Ces chaines sont notamment visibles sur les figures 3 et 8.

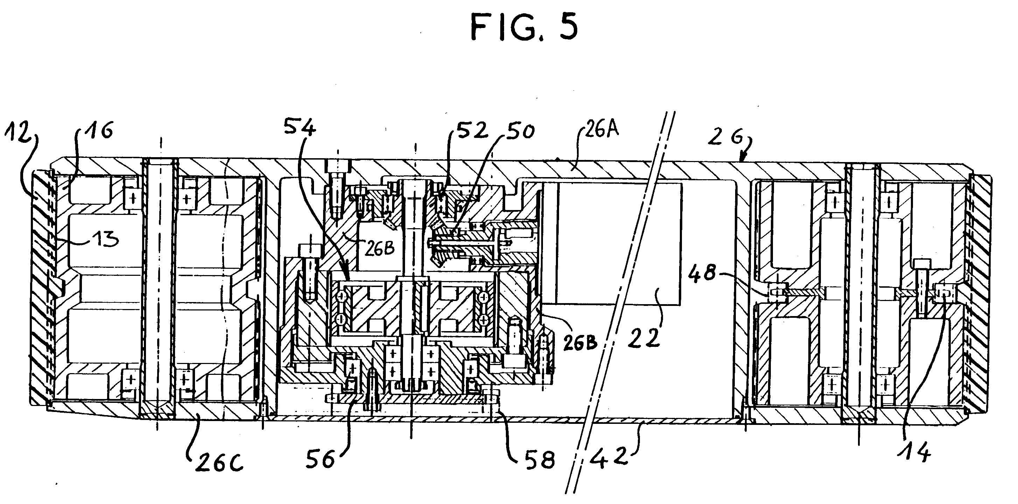

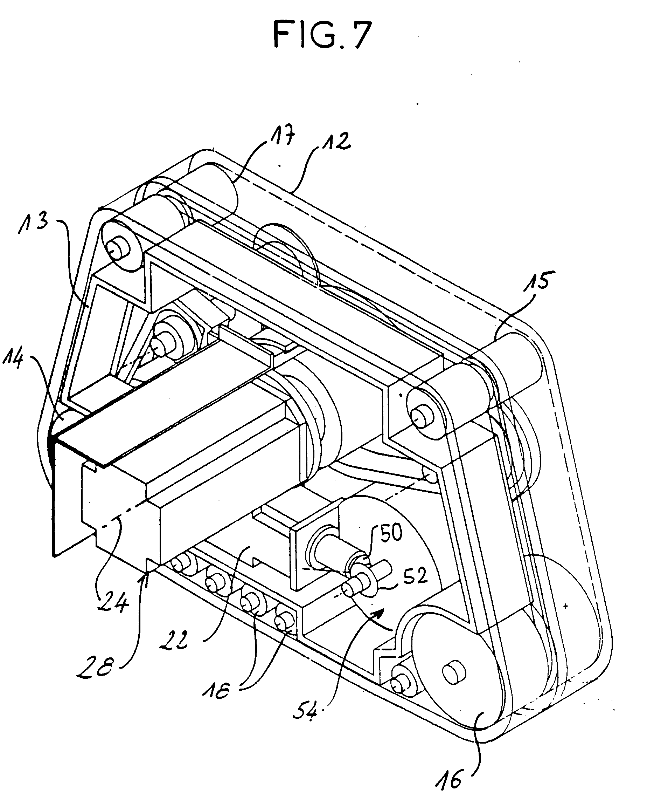

Conformément aux figures 5 et 7, le moteur d'inclinaison 22 entraîne, par l'intermédiaire d'un renvoi d'angle à pignons 50 et 52, un réducteur de vitesse 54 qui entraîne lui-même un pignon 56. Ce dernier entraîne, à l'aide d'une chaîne 58, un groupe de pignons intermédiaire 60 qui entraîne lui-même une chaîne 62. Les roues 14 et 16 et les pignons 46, 50, 52, 56 et 60 sont montés sur des roulements portés par des supports tels que 26B formés en saillies transversalement externes sur le flanc interne rigide 26A de la carcasse 26. Les chaînes 44, 48, 58 et 62 sont munies de galets de maintien de tension qui fléchissent ces chaînes, comme représenté, mais qui ne sont pas eux-mêmes représentés. Comme représenté notamment sur la figure 8, la chaîne 62 prend appui sur un secteur denté d'appui d'inclinaison 34 pour entraîner les mouvements d'inclinaison du propulseur.

La carcasse 26 est constituée par un cadre mécanosoudé ou moulé en alliage léger dont la largeur, selon ladite direction transversale Y, est égale à celle de la chenille 12. Elle forme le flanc interne 26A, un flanc externe 26C et une bande 13 solidarisant ces deux flancs. Une ouverture de ce flanc externe est obturée par un capot externe 42. La chenille 12 tourne autour de ce cadre au contact de la bande 13 en forme de boucle. Cette bande porte un revêtement antifriction qui est également formé sur les crans internes prévus sur la chenille 12 pour permettre son entrainement par la roue d'avance 14.

Le propulseur qui vient d'être partiellement décrit présente les avantages et caractéristiques complémentaires suivantes :

Le capteur à six composantes qui constitue la partie de mesure 20B permet de ramener tous les efforts exercés sur le propulseur 4 à un même point. Or c'est grâce à ce capteur et à ceux qui lui correspondent dans les autres propulseurs que l'on connait à chaque instant tous les efforts qui sont appliqués au véhicule dans toutes les directions de l'espace, et par conséquent, les conditions d'équilibre du véhicule. Ainsi le fait que le véhicule soit équipé de tels capteurs intégrés permet de simplifier la conception du véhicule par rapport à un véhicule qui serait pourvu de capteurs d'efforts élémentaires répartis dans de nombreuses zones différentes de sa structure. Grâce à cela l'acquisition des données est quasi instantanée et demande un temps réduit de traitement, alors que, dans un véhicule autonome à capteurs répartis, cette acquisition est très lente, parce que les signaux doivent être traités par un calculateur puissant. Ceci résulte du fait que suivant leurs positions, les capteurs ont des taux de rendement variables qui faussent la mesure, génèrent des dispersions lors du traitement des signaux et limitent sensiblement les performances de l'ordinateur de traitement.

De plus le risque de panne d'un capteur apparaît plus faible dans le cas d'un capteur intégré que dans celui où on utilise plusieurs capteurs élémentaires pour assurer les mêmes fonctions.

Par ailleurs, les dispositions adoptées dans ce véhicule conformément à la présente invention permettent de loger à la fois les moyens d'avance (le moteur d'avance et ses éléments de transmission tels que les chaines 44 et 48) et les moyens d'inclinaison (le moteur d'inclinaison et ses éléments de transmission tels que les chaines 58 et 62) dans le volume limité d'un propulseur appartenant à un vehicule qui doit être compact. Ces dispositions permettant d'obtenir ce résultat sans compromettre l'efficacité de ces moyens d'avance et d'inclinaison ni nécessiter l'utilisation, pour constituer ces moyens, d'éléments exceptionnels ou exagérémetn coûteux.

Certains aux moins desdits propulseurs sont amovibles et de préférence interchangeables, ledit moyeu de propulseur de chacun de ces propulseurs amovibles étatn montée de manière amovibles sur ledit corps de véhicule.

Un véhicule tel que décrit procure une simplicité et une facilité de fabrication et un gain de poids très important, augmentant considérablement les performances du véhicule.

En outre, le guidage central de la chenille 12 assure une stabilité plus grande au véhicule par une meilleure tenue qui évite les risques de déjanter lors d'une intervention.

Par ailleurs la conception du propulseur est telle :
– que ses parois forment un caisson étanche à l'eau et, notamment au paquet d'eau de mer,
– qu'il est anti-déflagrant grâce à une légère suppression dans des boitiers qui renferment l'ensemble des éléments de transmission électriques et électroniques des organes mécaniques.

## Revendications

**1/** Véhicule à propulseurs motorisés caractérisé par le fait qu'un moteur d'avance (28) d'un propulseur allongé (4) est logé dans un moyeu tubulaire transversal (20) autour duquel ce propulseur peut être incliné par rapport au corps (2) du véhicule grâce à des moyens d'inclinaison motorisés intérieurs à ce propulseur et extérieurs à ce moyeu sur lequel ils prennent appui.

**2/** Véhicule selon la revendication 1, comportant :
– un corps de véhicule (2) présentant une longueur et une largeur selon des directions longitudinale (X) et transversale (Y), respectivement,
– et des propulseurs (4, 6, 7) pour supporter ledit corps de véhicule et pour le propulser selon ladite direction longitudinale, chacun de ces propulseurs (4) comportant les éléments suivants :
– une carcasse de propulseur (26) pour maintenir mutuellement lesdits éléments de ce propulseur,
– un ensemble d'appui au sol (12, 14, 16) supportant ladite carcasse et présentant une plage d'appui au sol (19) qui s'étend selon ladite direction longitudinale et jusqu'à deux extrémités de laquelle un point d'appui de cet ensemble sur le sol peut se déplacer,
– un moteur d'avance (28) entraînant ledit ensemble d'appui au sol dans un mouvement d'avance pour propulser ladite carcasse,
– une structure de liaison de propulseur (20) liant ladite carcasse (26) audit corps de véhicule (2) pour supporter ce dernier tout en permettant à cette carcasse d'effectuer, par rapport à ce corps, des mouvements d'inclinaison qui sont des rotations autour d'un axe d'inclinaison (24) parallèle à ladite direction transversale et qui déplacent ledit point d'appui au sol,
– et un moteur d'inclinaison (22) permettant, grâce à un appui sur ladite structure de liaison (20), d'entraîner lesdits mouvements d'inclinaison de ladite carcasse (26), ledit véhicule étant caractérisé par le fait que ladite structure de liaison est constituée par un moyeu de propulseur (20) ayant un axe selon ledit axe d'inclinaison (24) et s'étendant transversalement à partir dudit corps de véhicule (2) vers l'extérieur du véhicule pour pénétrer dans le volume dudit propulseur (20C), ledit moteur d'avance (28) étant situé au moins partiellement dans l'espace intérieur audit moyeu de propulseur (20) et fixé à ce moyeu, ce moteur entraînant un pignon de moteur d'avance (28C) qui tourne autour dudit axe d'inclinaison (24) et qui est situé, selon ladite direction transversale (Y), au delà d'une extrémité transversalement externe (20C) de ce moyeu.

**3/** Véhicule selon la revendication 2, caractérisé par le fait que ledit moteur d'avance (28) comporte une partie mécanique constituée par un réducteur de vitesse (28B) porté par une partie de support (20C) dudit moyeu de propulseur (20) à l'intérieur de ce moyeu, et une partie électromécanique constituée par un moteur électrique (28A) qui est porté par ledit réducteur de vitesse et qui est situé dans un logement (36) formé dans ledit corps de véhicule (2) dans le prolongement dudit moyeu de propulseur (20).

**4/** Véhicule selon la revendication 3, caractérisé par le fait que ladite partie de support (20C) dudit moyeu de propulseur (20) porte une extrémité transversalement externe (32A) d'un moyeu externe rigide (32) qui s'étend, à partir de cette extrémité, jusqu'à une extrémité transversalement interne (32B) en entourant coaxialement ce moyeu de propulseur, ce moyeu externe portant, sur sa surface extérieure, des paliers (30) qui supportent ladite carcasse (26).

**5/** Véhicule selon la revendication 4, caractérisé par le fait que ladite partie de support (20C) dudit moyeu de propulseur (20) porte extérieurement un élément d'appui d'inclinaison (34) constituant un appui pour permettre audit moteur d'inclinaison (22) d'entraîner lesdits mouvements d'inclinaison.

**6/** Véhicule selon la revendication 2, caractérisé par le fait que certains aux moins desdits propulseurs (4, 6, 7) sont amovibles et de préférence interchangeables, ledit moyeu de propulseur (20) de chacun de ces propulseurs amovibles étant montée de manière amovible sur ledit corps de véhicule (2).

# FIG. 1

# FIG. 2

FIG.3

# FIG. 4

# FIG. 5

EP 0 466 575 A1

FIG. 6

# FIG.7

# FIG. 8

Office européen
des brevets

# RAPPORT DE RECHERCHE EUROPEENNE

Numero de la demande

EP    91 40 1902

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4702331 (HAGIHARA ET AL.) <br> * colonne 3, lignes 15 – 47; figures 3, 4 * <br> --- | 1 | B62D55/065 <br> B62D55/075 <br> B60K7/00 <br> B62D55/116 |
| Y | US-A-4389586 (FOSTER ET AL.) <br> * abrégé * <br> --- | 1 | |
| A | FR-A-2529157 (TOKYO SHIBAURA DENKI) <br> * revendications 1, 5; figures 1-4, 10, 11 * <br> ----- | 1 | |

DOMAINES TECHNIQUES
RECHERCHES (Int. Cl.5)

B62D
B60K

Le présent rapport a été établi pour toutes les revendications

| Lieu de la recherche | Date d'achèvement de la recherche | Examinateur |
|---|---|---|
| BERLIN | 27 SEPTEMBRE 1991 | BROYDE, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)